# EUROPEAN PATENT APPLICATION

(11) **EP 4 852 558 A1**
(43) Date of publication of application: **09.12.2026**
(21) Application number: 25781316.2
(22) Date of filing: 11.02.2025
(51) Int. Cl.: H04W 72/044, H04W 24/10

(54) **COMMUNICATION METHOD, COMMUNICATION APPARATUS, AND COMMUNICATION SYSTEM**

(30) Priority: 03.04.2024 CN 202410406141
(71) Applicant: Honor Device Co., Ltd., Shenzhen, Guangdong 518040 (CN)
(72) Inventor: TANG, Xiaoxuan, Shenzhen, Guangdong 518040 (CN)
(74) Representative: MERH-IP Matias Erny Reichl Hoffmann Patentanwälte PartG mbB
(86) International application number: PCT/CN2025/076779
(87) International publication number: WO 2025/209019

(57) **Abstract**

This application provides a communication method, a communication apparatus, and a communication system. In the communication method, a first configuration is received, where the first configuration is used to measure M beams, and the first configuration further indicates at least one first condition; and first information is sent, where the first information includes layer-1 measurement information of N beams, each of the N beams satisfies the at least one first condition, N is less than or equal to M, and the N beams belong to the M beams. According to the method, the reported layer-1 measurement information of the beam is selected based on the first condition, so that an amount of data for transmission may be reduced.

## Description

This application claims priority to Chinese Patent Application No. 202410406141.7, filed with the China National Intellectual Property Administration on April 3, 2024 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

Currently, reporting of channel state information (channel state information, CSI) related to layer 1 (L1) measurement may be configured to be aperiodic, for example, using a physical downlink control channel (physical downlink control channel, PUSCH); or may be configured to be periodic, for example, using a physical uplink control channel (physical uplink control channel, PUCCH); or may be configured to be semi-persistent, for example, using a PUSCH and a PUCCH activated by downlink control information (downlink control information, DCI). Generally, L1 CSI reporting is used for detecting a serving cell, and a CSI report (report) of the serving cell may be used to carry an L1 measurement result of an extra physical cell identifier (physical cell identifier, PCI) in a same distributed unit (distributed unit, DU).

In some current discussions, L1 measurement reporting may be extended to intra-frequency or inter-frequency cells in a same central unit (centralized unit, CU). Reference signal received power (reference signal received power, RSRP) quality of preset cells and all synchronization signal/physical broadcast channel blocks (synchronization signal and PBCH block, SSB) in the preset cells are reported by using uplink control information (uplink control information, UCI). Because a quantity of preset cells and a quantity of SSBs are large, a volume of data to be reported is large. As a result, data coding complexity is high and signaling overheads for uploading data are large.

### SUMMARY

This application provides a communication method, a communication apparatus, and a communication system. The communication method may reduce an amount of data to be reported in an L1 measurement result.

According to a first aspect, this application provides a communication method. The method may be performed by a terminal device or a module (for example, a chip) in the terminal device, and the method includes: receiving a first configuration, where the first configuration is used to measure M beams, and the first configuration further indicates at least one first condition; and sending first information, where the first information includes layer-1 measurement information of N beams, each of the N beams satisfies the at least one first condition, N is less than or equal to M, and the N beams belong to the M beams.

In this embodiment of this application, the terminal device may select the N beams from the M beams based on the first condition, and further report the layer-1 measurement information of the N beams. In this method, layer-1 measurement information of the M beams does not need to be reported, so that flexibility of reporting a measurement result measured at a layer 1 is increased, and an amount of data for transmission may be reduced.

With reference to the first aspect, in a possible implementation, the first condition includes at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, where the serving beam, the first beam, and the second beam belong to the M beams.

Optionally, the first beam may be the second beam. In this case, that the increase or the decrease of the signal quality of the first beam is greater than the eighth threshold may indicate that an increase or a decrease of the signal quality of the second beam is greater than the eighth threshold.

Each of the first threshold, the second threshold, the third threshold, the fourth threshold, the fifth threshold, the sixth threshold, the seventh threshold, and the eighth threshold may be pre-configured. A specific value of each threshold is not limited in this application, and may be set based on a beam.

With reference to the first aspect, in a possible implementation, the N beams include a third beam, the third beam and a fourth beam belong to a same cell, a same distributed unit DU, or a same central unit CU, the fourth beam does not belong to the N beams, and the first information further includes layer-1 measurement information of the fourth beam.

In this embodiment of this application, the terminal device may further send the layer-1 measurement information of the fourth beam to a network device. The information may be used by the network device to determine overall signal quality of the cell, the DU, or the CU to which the third beam belongs. This may improve accuracy of determining, by the network device, the signal quality of the cell, the DU, or the CU corresponding to the terminal device.

With reference to the first aspect, in a possible implementation, the method further includes: sending second information, where the second information includes information associated with the first information, and/or the second information is used to request an uplink resource, and the uplink resource is used for sending the first information.

Optionally, the second information indicates the uplink resource required by the first information.

In this embodiment of this application, when being about to send the first information, the terminal device requests the uplink resource from the network device. This method may save uplink resources.

With reference to the first aspect, in a possible implementation, the uplink resource used by the terminal device for sending the first information may be pre-configured.

With reference to the first aspect, in a possible implementation, the second information includes at least one of the following: one or more identifiers of one or more CUs; one or more identifiers of one or more DUs; one or more identifiers corresponding to one or more first cells, where at least one beam in beams corresponding to the first cell belongs to the N beams; or identifiers corresponding to M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a bandwidth part BWP; or an identifier of a logical channel group LCG.

With reference to the first aspect, in a possible implementation, the first information includes at least one of the following: one or more identifiers corresponding to one or more first cells, where at least one beam in beams corresponding to the first cell belongs to the N beams; or identifiers of M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a BWP; or signal quality of the N beams; or signal quality of the first cell; or fourth indication information, where the fourth indication information indicates whether there is a timing advance TA.

With reference to the first aspect, in a possible implementation, the signal quality of the first cell may be a weighted average or an average of signal quality of beams that belong to the N beams in the beams corresponding to the first cell, or an average of signal quality of a preset quantity of beams in the beams corresponding to the first cell.

With reference to the first aspect, in a possible implementation, the method further includes: receiving a first message, where the first message is used to request the first information.

With reference to the first aspect, in a possible implementation, the method further includes: receiving fifth indication information, where the fifth indication information indicates a format of the first information.

In this embodiment of this application, when being about to send the first information, the terminal device requests the uplink resource from the network device. This method may save uplink resources.

According to a second aspect, this application provides a communication method. The method may be performed by a network device or a module (for example, a chip) in the network device, and the method includes: sending a first configuration, where the first configuration is used to measure M beams, and the first configuration further indicates at least one first condition; and receiving first information, where the first information includes layer-1 measurement information of N beams, each of the N beams satisfies the at least one first condition, N is less than or equal to M, and the N beams belong to the M beams.

With reference to the second aspect, in a possible implementation, the first condition includes at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, where the serving beam, the first beam, and the second beam belong to the M beams.

With reference to the second aspect, in a possible implementation, the N beams include a third beam, the third beam and a fourth beam belong to a same cell, a same distributed unit DU, or a same central unit CU, the fourth beam does not belong to the N beams, and the first information further includes layer-1 measurement information of the fourth beam.

With reference to the second aspect, in a possible implementation, the method further includes: receiving second information, where the second information includes information associated with the first information, and/or the second information is used to request an uplink resource, and the uplink resource is used for sending the first information.

With reference to the second aspect, in a possible implementation, the second information includes at least one of the following: one or more identifiers of one or more CUs; one or more identifiers of one or more DUs; one or more identifiers corresponding to one or more first cells, where at least one beam in beams corresponding to the first cell belongs to the N beams; or identifiers corresponding to M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a bandwidth part BWP; or an identifier of a logical channel group LCG.

With reference to the second aspect, in a possible implementation, the first information includes at least one of the following: one or more identifiers corresponding to one or more first cells, where at least one beam in beams corresponding to the first cell belongs to the N beams; or identifiers of M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a BWP; or signal quality of the N beams; or signal quality of the first cell; or fourth indication information, where the fourth indication information indicates whether there is a timing advance TA.

With reference to the second aspect, in a possible implementation, the signal quality of the first cell may be a weighted average or an average of signal quality of beams that belong to the N beams in the beams corresponding to the first cell, or an average of signal quality of a preset quantity of beams in the beams corresponding to the first cell.

With reference to the second aspect, in a possible implementation, the method further includes: receiving a first message, where the first message is used to request the first information.

With reference to the second aspect, in a possible implementation, the method further includes: sending fifth indication information, where the fifth indication information indicates a format of the first information.

According to a third aspect, this application provides a communication apparatus. The communication apparatus may be a terminal device or a chip/circuit in the terminal device. The communication apparatus is configured to perform the method in the first aspect or any possible implementation of the first aspect. The communication apparatus includes a unit for performing the method in the first aspect or any possible implementation of the first aspect.

According to a fourth aspect, this application provides a communication apparatus. The communication apparatus may be a network device or a chip/circuit in the network device. The communication apparatus is configured to perform the method in the second aspect or any possible implementation of the second aspect. The communication apparatus includes a unit for performing the method in the second aspect or any possible implementation of the second aspect.

In the third aspect or the fourth aspect, the communication apparatus may include a transceiver unit and a processing unit. For specific descriptions of the transceiver unit and the processing unit, refer to apparatus embodiments shown below. For beneficial effects of the third aspect and the fourth aspect, refer to the related descriptions of the first aspect and the second aspect. Details are not described herein again.

According to a fifth aspect, this application provides a communication apparatus. The communication apparatus may include a processor and an interface circuit, and the processor is connected to the interface circuit. The interface circuit is configured to exchange (or receive/send or input/output) information or data, and the processor is configured to run program instructions, so that the communication apparatus performs the method described in the first aspect, the second aspect, or any possible implementation of the first aspect or the second aspect. The interface circuit may be a communication interface or a transceiver. The transceiver may be a radio frequency module in the communication apparatus, or a combination of a radio frequency module and an antenna, or an input/output interface of a chip or a circuit.

According to a sixth aspect, this application provides a readable storage medium. The readable storage medium stores program instructions. When the program instructions are run on a computer, the computer is caused to perform the method described in the first aspect, the second aspect, or any possible implementation of the first aspect or the second aspect.

According to a seventh aspect, this application provides a program product including program instructions. When the program product runs, the method described in the first aspect, the second aspect, or any possible implementation of the first aspect or the second aspect is performed.

According to an eighth aspect, this application provides an apparatus. The apparatus may be implemented in a form of a chip, or may be implemented in a form of a device. The apparatus includes a processor. The processor is configured to read and execute a program stored in a memory, to perform the information exchange method provided in one or more of the first aspect or the second aspect, or any possible implementation of the first aspect or the second aspect. Optionally, the apparatus further includes the memory, and the memory is connected to the processor through a circuit. Optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a ninth aspect, this application provides a communication system. The communication system includes a terminal device and a network device. The terminal device is configured to perform the method described in the first aspect or any possible implementation of the first aspect. The network device is configured to perform the method described in the second aspect or any possible implementation of the second aspect.

For technical effects achieved in the foregoing aspects, refer to each other or beneficial effects in method embodiments shown below. Details are not described herein again.

### BRIEF DESCRIPTION OF DRAWINGS

FIG. 1 is a diagram of a network architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a diagram of a structure of a communication apparatus according to an embodiment of this application;
FIG. 6 is a diagram of another structure of a communication apparatus according to an embodiment of this application; and
FIG. 7 is a diagram of still another structure of a communication apparatus according to an embodiment of this application.

### DESCRIPTION OF EMBODIMENTS

The following clearly and completely describes the technical solutions in the embodiments of this application with reference to the accompanying drawings in the embodiments of this application. In the descriptions of embodiments of this application, unless otherwise specified, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

It should be understood that the terms "first", "second", and the like in the specification, claims, and accompanying drawings of this application are used to distinguish between different objects, and are not used to describe a specific sequence. In addition, the terms "include", "have", and any variant thereof are intended to cover a non-exclusive inclusion. For example, a process, method, system, product, or device that includes a series of steps or units is not limited to the listed steps or units, but optionally further includes an unlisted step or unit, or optionally further includes another step or unit inherent to the process, method, product, or device.

"Embodiment" mentioned in this application means that particular features, structures, or characteristics described with reference to the embodiment may be included in at least one embodiment of this application. The phrase shown at various locations in this specification may not necessarily refer to a same embodiment, nor an independent or optional embodiment exclusive from another embodiment. A person skilled in the art explicitly or implicitly understands that embodiments described in this application may be combined with other embodiments.

Currently, in a case of continuous inter-CU L1/L2-triggered mobility (L1/L2 triggered Mobility, LTM) handovers, UE user equipment (user equipment, UE) needs to measure and report L1 measurement reports of different DUs in a plurality of CUs, and a large amount of data needs to be reported. An existing manner of directly encoding SSBs of a plurality of cells in a unified manner leads to high coding complexity and large signaling overheads.

In view of this, this application proposes a communication method. In the method, a terminal device may: receive a first configuration sent by a network device, where the first configuration is used to measure M beams, and the first configuration further indicates at least one first condition; and send first information, where the first information includes layer-1 measurement information of N beams, each of the N beams satisfies the at least one first condition, N is less than or equal to M, and the N beams belong to the M beams. According to the method, the reported layer-1 measurement information of the beam is selected based on the first condition, so that an amount of data for transmission may be reduced.

To better understand a communication method, a communication apparatus, and a communication system that are proposed in this application, the following first describes a network architecture to which embodiments of this application are applied.

For example, the communication system may be a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, or a worldwide interoperability for microwave access (worldwide interoperability for microwave access, WiMAX) system. The technical solutions in embodiments of this application may be further applied to another communication system, for example, a public land mobile network (public land mobile network, PLMN) system, a long term evolution advanced (LTE advanced, LTE-A) system, a 5th generation (the 5th generation, 5G) mobile communication system, a new radio (newradio, NR) system, a machine-to-machine (machine to machine, M2M) communication system, or another future evolved communication system. This is not limited in embodiments of this application. The technical solutions provided in embodiments of this application may be further applied to another communication system. In the communication system, there is an entity that may send control information and send (and/or receive) a transport block. In the communication system, there is another entity that may receive control information and receive (and/or send) a transport block.

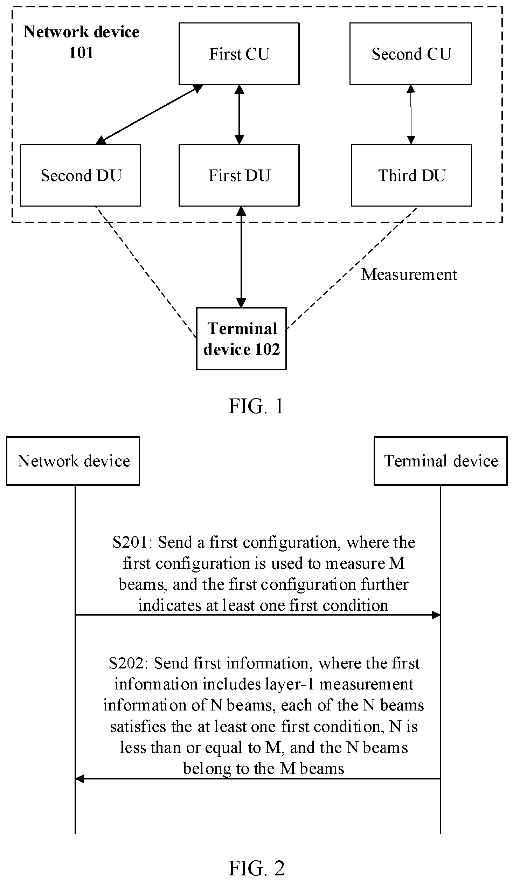

FIG. 1 is a diagram of a network architecture of a communication system according to an embodiment of this application.

As shown in FIG. 1, a network device 101 and a terminal device 102 form a communication system. In FIG. 1, a solid line with an arrow represents a communication connection, and a dashed line with an arrow represents an operation such as measurement.

In this application, an architecture of the network device 101 may be a CU-DU architecture. CU stands for Centralized Unit, central unit; and DU stands for Distributed Unit, distributed unit. For example, in a 5G architecture, DUs of different base stations are independently deployed, but CUs of the different base stations are centrally deployed; and RRUs and antennas are integrated into AAUs, while BBUs are split into DUs and CUs, each base station has a set of DUs, and a plurality of sites share a same CU for centralized management.

As shown in FIG. 1, the network device 101 may include at least one DU (for example, a first DU) and at least one CU (for example, a first CU). The first DU is a DU in which a serving cell of the terminal device 102 is located, and the first DU establishes a communication connection with the first CU.

For example, the network device 101 includes a DU in which a candidate cell of the terminal device 102 is located, for example, a second DU and a third DU. The second DU may establish a communication connection with the first CU, and the third DU may establish a communication connection with a second CU.

The terminal device 102 may be connected to the network device 101 in a wireless manner, and may access a core network by using the network device 101. The terminal device 102 may be at a fixed location, or may be movable.

It should be noted that the first DU, the second DU, the third DU, the first CU, and the second CU each may be a separate network device. In embodiments of this application, the five separate network devices, namely, the first DU, the second DU, the third DU, the first CU, and the second CU, are referred to as the network device 101.

The network device 101 may be an entity configured to transmit or receive a signal, or may be a device configured to communicate with the terminal device 102. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects the terminal device 102 to the wireless network. Currently, examples of some RAN nodes are a base station, a next-generation NodeB gNB, a transmission reception point (transmission reception point, TRP), an evolved NodeB (evolved Node B, eNB), a home base station, a baseband unit (baseband unit, BBU), or an access point (access point, AP) in a WiFi system. In a network structure, the network device may include a central unit (centralized unit, CU) node or a distributed unit (distributed unit, DU) node, or a RAN device including a CU node and a DU node. In an O-RAN system, the CU may also be referred to as an O-CU, and the DU may also be referred to as an O-DU.

Embodiments of this application mainly relate to an access network device. Therefore, in the following descriptions, unless otherwise specified, the network device is the access network device. In the following descriptions, a base station may represent the network device and/or the access network device.

For example, an interface between the CU and the DU may be referred to as an F1 interface. A control plane (control panel, CP) interface may be F1-C, and a user plane (user panel, UP) interface may be F1-U. The CU and the DU may be obtained through division based on a protocol layer of the wireless network. For example, functions of a PDCP layer and a protocol layer above the PDCP layer are set on the CU, and functions of protocol layers below the PDCP layer (for example, an RLC layer and a MAC layer) are set on the DU.

It may be understood that division into processing functions of the CU and the DU based on the protocol layer is merely an example, and there may be another division manner. For example, functions of protocol layers above the RLC layer are set on the CU, and functions of the RLC layer and a protocol layer below the RLC layer are set on the DU. For another example, the CU or the DU may have more functions of protocol layers through division. For another example, the CU or the DU may further have a part of processing functions of protocol layers through division. In a design, a part of functions of the RLC layer and functions of protocol layers above the RLC layer are set on the CU, and remaining functions of the RLC layer and functions of protocol layers below the RLC layer are set on the DU. In another design, division into functions of the CU or the DU may alternatively be performed based on service types or other system requirements. For example, division may be performed based on a latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management; and the DU may have a plurality of radio frequency functions, or a radio frequency function may be set remotely. This is not limited in embodiments of this application.

For example, functions of the CU may be implemented by using one entity or different entities. For example, functions of the CU are further divided, that is, a control plane and a user plane are separated and implemented by using different entities, which are respectively a control plane CU entity (namely, a CU-CP entity) and a user plane CU entity (namely, a CU-UP entity). The CU-CP entity and the CU-UP entity may be coupled to the DU, to jointly complete a function of the RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs.

The terminal device 102 is a user-side entity configured to receive or transmit a signal, and is mainly configured to implement a function of performing wireless communication with the network device 101.

For example, the terminal device 102 may be an access terminal, a subscriber unit, a subscriber station, a mobile station, a mobile console, a remote station, a remote terminal, a mobile device, a user terminal, a terminal, a wireless communication device, a user agent, or a user apparatus. The terminal device 102 may alternatively be a mobile phone (mobile phone), a cellular phone, a cordless phone, a session initiation protocol (session initiationprotocol, SIP) phone, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless local loop (wireless local loop, WLL) station, a personal digital assistant (personal digital assistant, PDA), a handheld device having a wireless communication function, a compute device, another processing device connected to a wireless modem, a vehicle-mounted device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable device (for example, a smart watch, a smart band, or a pedometer), a terminal device in a 5G network, a terminal device in a future evolved public land mobile communication network (public land mobile network, PLMN), or the like. This is not limited in embodiments of this application. The terminal device 102 may be deployed on land, including being deployed indoor, outdoor, handheld, wearable, or vehicle-mounted; or may be deployed on a water surface (for example, on a ship); or may be deployed in the air (for example, on an airplane, a balloon, or a satellite). In embodiments of this application, the terminal device 102 may be legacy UE, or may be RB-level partial frequency sounding (RB-level partial frequency hopping, RPFS) UE that supports SRS coverage and capacity enhancement, or may be other UE. A type of the terminal device 102 is not limited in this application. The legacy UE indicates user equipment that supports an existing mechanism, for example, user equipment that supports release-15 and release-16.

In embodiments of this application, the terminal device 102 or the network device 101 includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal device 102 or the network device 101, or may be a functional module that can invoke and execute a program in the terminal device 102 or the network device 101.

It should be noted that a quantity and a type of terminal devices 102 included in the network architecture shown in FIG. 1 are merely examples. This is not limited in embodiments of this application. For example, more or fewer terminal devices 102 communicating with the network device 101 may be further included. For brief description, this is not described in the accompanying drawings.

In addition, in the network architecture shown in FIG. 1, although the network device 101 and the terminal device 102 are shown, the application scenario may not be limited to including the network device 101 and the terminal device 102, for example, may further include a core network device, or a device configured to bear a virtualized network function.

With reference to the network architecture, the following describes a communication method provided in an embodiment of this application.

FIG. 2 is a schematic flowchart of a communication method according to an embodiment of this application. A function executed by a terminal device in this embodiment of this application may alternatively be executed by a module (for example, a chip) in the terminal device, and a function executed by a network device in this application may alternatively be executed by a module (for example, a chip) in the network device.

As shown in FIG. 2, the communication method may include a part or all of the following steps.

Step S201: The network device sends a first configuration to the terminal device, where the first configuration is used to measure M beams, and the first configuration further indicates at least one first condition.

Correspondingly, the terminal device receives the first configuration sent by the network device.

For example, the first condition indicated by the first configuration may include at least one of the following: signal quality of a serving beam is less than a first threshold (referred to as a condition 1 for ease of description); or an increase or a decrease of the signal quality of the serving beam is greater than a second threshold (referred to as a condition 2 for ease of description); or signal quality of a first beam is greater than a third threshold (referred to as a condition 3 for ease of description), where the first beam and the serving beam are different beams; or the signal quality of the first beam is greater than the signal quality of the serving beam and a difference between the signal quality of the first beam and the signal quality of the serving beam is greater than a fourth threshold (referred to as a condition 4 for ease of description); or the signal quality of the first beam is greater than a fifth threshold and the signal quality of the serving beam is less than a sixth threshold (referred to as a condition 5 for ease of description); or signal quality of a second beam is less than a seventh threshold (referred to as a condition 6 for ease of description) and the second beam is a preset beam; or an increase or a decrease of the signal quality of the first beam is greater than an eighth threshold (referred to as a condition 7 for ease of description), where the serving beam, the first beam, and the second beam belong to the M beams.

Optionally, the first beam in the condition 7 may be the second beam. If the second beam is an anchor beam, the condition 7 is that an increase or a decrease of signal quality of the anchor beam is greater than the eighth threshold.

The condition 2 may be specifically that an increase or a decrease of signal quality of the serving beam within preset duration T1 is greater than the second threshold, or a difference between results of two measurements of the serving beam is greater than the second threshold. The condition 7 may be specifically that an increase or a decrease of signal quality of the serving beam within preset duration T2 is greater than the second threshold. Values of T1 and T2 are not limited in this application. The two measurements are two adjacent measurements, or two measurements at an interval of a certain quantity of times.

Optionally, the first condition may be related to quality of the serving beam. For example, the first condition indicates that the quality of the serving beam is poor to a certain extent, namely, the condition 1 and the condition 2. Alternatively, the first condition is related to quality of another beam. For example, the first condition indicates that the quality of the another beam is good to a certain extent, namely, the condition 3. Alternatively, the first condition is related to a comparison between quality of another beam and quality of the serving beam. For example, the first condition indicates that the quality of the another beam is better than the quality of the serving beam to a certain extent, namely, the condition 4 and the condition 5. Alternatively, the first condition is related to quality of the anchor beam (namely, the second beam). For example, the first condition indicates that the anchor beam is poor to a certain extent, namely, the condition 6 and the condition 7. The anchor beam may be a preset beam of a group (DU, CU, or beam group) to which the serving beam belongs. The anchor beam may be a pre-configured beam, a beam corresponding to a reference signal, or a transmission configuration indication (transmission configuration indication, TCI) state (state).

That the first configuration is used to measure the M beams may mean that the first configuration is used by the terminal device to determine a specific beam on which layer-1 measurement is performed; or the first configuration is configuration information of the M beams and is used by the terminal device to determine the M beams. Specifically, the first configuration may be a beam-related CSI resource set or a time-frequency domain position of a related reference signal, and is used to determine a time-frequency domain position at which a reference signal is received.

For example, the first configuration includes the at least one first condition, for example, includes the condition 1 and the condition 2; or
the first configuration may include a condition identifier, and the condition identifier indicates the at least one first condition, for example, a condition identifier including the condition 1.

The at least one first condition is used by the terminal device to determine to report L1 measurement information of a specific beam in the M beams. That is, the N beams below are beams, whose L1 measurement information needs to be reported, determined from the M beams based on the at least one first condition.

Optionally, the first configuration may further indicate a correspondence between the at least one first condition and the M beams, and a first condition corresponding to each of the M beams is used to determine whether L1 measurement information of the beam needs to be reported to the network device. Each of the M beams at least corresponds to one first condition. First conditions corresponding to each beam may be the same or may be different. A quantity of first conditions corresponding to each beam may be the same or may be different. This is not limited in this application.

Step S202: The terminal device sends first information to the network device, where the first information includes layer-1 measurement information of the N beams, each of the N beams satisfies the at least one first condition, N is less than or equal to M, and the N beams belong to the M beams.

Correspondingly, the network device receives the first information sent by the terminal device.

In some embodiments, the terminal device may determine, based on layer-1 measurement information corresponding to the M beams, beams that satisfy the at least one first condition in the M beams as the N beams, and further send the first information to the network device, where the first information includes the layer-1 measurement information of the N beams.

For example, the first information includes at least one of the following: one or more identifiers corresponding to one or more first cells, where at least one beam in beams corresponding to the first cell belongs to the N beams; or identifiers of M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a BWP; or signal quality of the N beams; or signal quality of the first cell; or fourth indication information, where the fourth indication information indicates whether there is a timing advance TA.

For example, the identifier corresponding to the first cell may be specifically a physical cell identifier PCI, a candidate cell-related identifier (for example, a candidate ID), or a pre-defined index.

For example, the signal quality of the first cell may be a weighted average or an average of signal quality of beams that belong to the N beams in the beams corresponding to the first cell, or an average of signal quality of a preset quantity of beams in the beams corresponding to the first cell. The preset quantity of beams may include a beam that does not satisfy the first condition. For example, a beams in the beams corresponding to the first cell satisfy a first condition corresponding to the beam, the preset quantity is b, and a<b. In this case, the terminal device may select b-a beams except the a beams from the beams corresponding to the first cell, calculate an average value of signal quality of both the a beams and the selected b-a beams, and use the average value obtained through calculation as the signal quality of the first cell.

Optionally, the first information sent by the terminal device to the network device may further include layer-1 measurement information of a beam in the M beams that does not satisfy the first condition. For example, the N beams include a third beam, the third beam and a fourth beam belong to a same cell, a same distributed unit DU, or a same central unit CU, the fourth beam does not belong to the N beams, and the first information further includes layer-1 measurement information of the fourth beam.

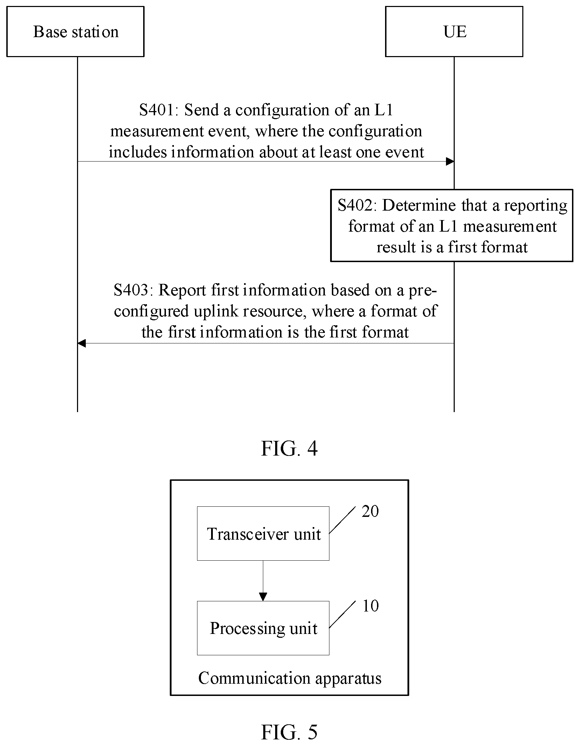

In some embodiments, before the terminal device sends the first information to the network device, the terminal device may send second information to the network device, where the second information is used to request an uplink resource, and the uplink resource is used for sending the first information; and further, the terminal device sends the first information by using the uplink resource. For example, reference may be made to the embodiment shown in FIG. 4.

For example, the second information includes at least one of the following: one or more identifiers of one or more CUs (referred to as an identifier 1 for ease of description); one or more identifiers of one or more DUs (referred to as an identifier 2 for ease of description); one or more identifiers corresponding to one or more first cells, where at least one beam in beams corresponding to the first cell belongs to the N beams; or identifiers corresponding to M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a bandwidth part BWP; or an identifier of a logical channel group LCG.

Optionally, at least one beam in beams corresponding to each of the one or more CUs in the identifier 1 belongs to the N beams, and at least one beam in beams corresponding to each of the one or more DUs in the identifier 2 belongs to the N beams.

Optionally, the terminal device may: receive fifth indication information sent by the network device, where the fifth indication information indicates a format of the first information; and further send the first information in the format indicated by the fifth indication information. For example, the fifth indication information may be an L1 measurement result related to a serving cell, or a measurement result (for example, indicating a CU index) of a candidate cell in a CU, or a measurement result corresponding to a reference signal resource. At least two reference signal resources measured in the measurement result are from cells in different CUs, and the at least two reference signal resources belong to reference signal resources corresponding to the M beams.

In some embodiments, the terminal device may: receive a first message from the network device, where the first message is used to request the first information; and further send the first information to the network device.

For example, the first message may include one of the following: an uplink resource, in which case, the terminal device may determine, based on the uplink resource, a time-frequency domain position at which the first information is sent; or a format of the first information, in which case, the terminal device may send the first information after determining the format of the first information; or specifically requested content of the first information. For example, if the first message includes an index of a CU, the terminal device may report an L1 measurement result of a beam related to the CU in the first information.

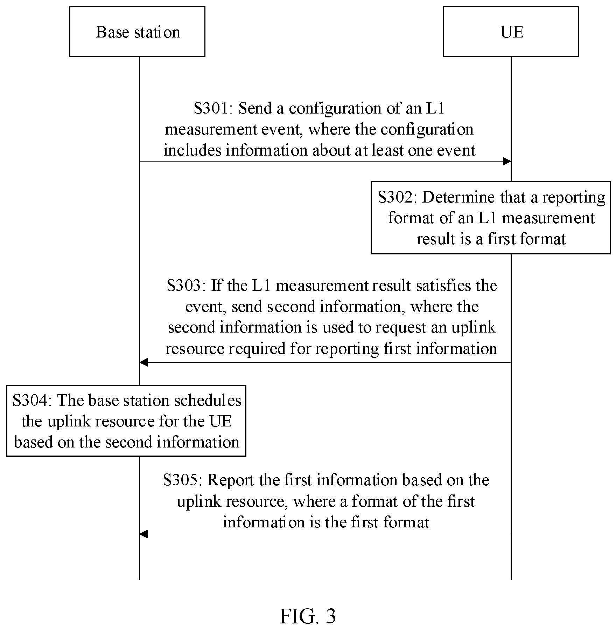

The method embodiment shown in FIG. 2 includes many possible implementation solutions. The following describes a part of implementation solutions thereof by way of example with reference to FIG. 3 and FIG. 4. It should be noted that, for related concepts, operations, or logical relationships that are not explained in FIG. 3 and FIG. 4, refer to the corresponding descriptions in the embodiment shown in FIG. 2.

In this application, embodiments shown in FIG. 3 and FIG. 4 may be used as a separate embodiment, neither of the embodiments shown in FIG. 3 and FIG. 4 may depend on the technical solution in FIG. 2, and a part of steps in the embodiments shown in FIG. 3 and FIG. 4 may alternatively be used as separate embodiments.

In the following embodiments, a communication method provided in this application is described in detail by using an example in which the terminal device is UE and the network device is a base station.

FIG. 3 is a schematic flowchart of another communication method according to an embodiment of this application.

**S301: The base station sends a configuration of an L1 measurement event to the UE, where the configuration includes information about at least one event.**

In this embodiment of this application, for ease of understanding, the first configuration is referred to as the configuration of the L1 measurement event, and the first condition is referred to as the event.

The configuration of the L1 measurement event is used by the UE to determine beams (namely, the M beams) measured at an L1.

For example, the at least one event may include the following several types: signal quality of a serving beam is less than a first threshold (referred to as an event 1 for ease of description); or an increase or a decrease of the signal quality of the serving beam is greater than a second threshold (referred to as an event 2 for ease of description); or signal quality of a first beam is greater than a third threshold (referred to as an event 3 for ease of description), where the first beam and the serving beam are different beams; or the signal quality of the first beam is greater than the signal quality of the serving beam and a difference between the signal quality of the first beam and the signal quality of the serving beam is greater than a fourth threshold (referred to as an event 4 for ease of description); or the signal quality of the first beam is greater than a fifth threshold and the signal quality of the serving beam is less than a sixth threshold (referred to as an event 5 for ease of description); or signal quality of a second beam is less than a seventh threshold (referred to as an event 6 for ease of description) and the second beam is a preset beam; or an increase or a decrease of the signal quality of the first beam is greater than an eighth threshold (referred to as an event 7 for ease of description), where the serving beam, the first beam, and the second beam belong to the M beams. For example, for a specific description of the event, refer to the related description of the first condition. Details are not described herein again.

Optionally, the configuration may further include a beam type (namely, the fifth indication information). For example, the beam type may be one of an intra cell, an intra CU, or an inter CU, where inter indicates inter-station, and intra indicates intra-station.

In some embodiments, the base station may further send a first message to the UE. The first message is used to request L1 reporting, and the first message may further include the beam type.

**S302. The UE determines that a reporting format of the L1 measurement result is a first format.**

In some embodiments, if the UE does not receive the beam type, the UE may determine that reported UCI is in a legacy format. That is, the L1 measurement result is reported by using UCI in a format in which CSI of a serving cell is reported. In other words, the first format is the legacy format.

In some other embodiments, if the UE receives the beam type, the UE may determine the reporting format of the L1 measurement result based on the beam type. For example, if the beam type is an intra cell, the reported UCI is in a legacy format, that is, the first format is legacy; if the beam type is an intra CU, the reported UCI is in a preset format, for example, an R18 LTM format, that is, the first format is the R18 LTM format; or if the beam type is an inter CU, the reported UCI or a MAC CE is in a format defined in step S305 below, that is, the first format is a format of the UCI or the MAC CE in step S305.

Table 1 shows an example of the first format.

**Table 1**

| Quantity of CSI reports | CSI content |
|---|---|
| CSI report number (for example, a CSI report 1) | Index of a beam 1 |
| | Index of a beam 2 |
| | ... |
| | Signal quality of the beam 1 |
| | Signal quality of the beam 2 |
| | ... |

In the format shown in Table 1, the UE may send a plurality of CSI reports. Each CSI report includes indexes of a plurality of beams and signal quality corresponding to the beams. Table 1 shows an example of a CSI report.

**S303: If the L1 measurement result satisfies the event, the UE sends second information to the base station, where the second information is used to request an uplink resource required for reporting first information.**

That the UE sends the second information to the base station may alternatively be expressed as: the UE reports the second information.

In some embodiments, the UE performs L1 measurement on the M beams, to obtain an L1 measurement result corresponding to each beam; the UE determines, based on the event, the L1 measurement result obtained through measurement; and if the L1 measurement result satisfies the event, the second information is reported. For example, the second information may be carried in a scheduling request (scheduling request, SR), a buffer status report (buffer status reporting, BSR), or a newly-defined MAC control element (MAC control element, MAC CE) request (Request). For example, the event that the L1 measurement result satisfies may be the event 1 or the event 5.

Optionally, the uplink resource may be pre-defined.

Optionally, the second information may be further used by a network to trigger additional measurement. For example, if reported quality of a cell is good after SSB-based measurement is performed, CSI-RS measurement for the cell may be activated.

Optionally, the second information includes at least one of the following: (1) an index of a cell (namely, the first cell) that satisfies an event, for example, the index of the cell may be a configuration identifier (config ID) of the cell; (2) an index of an event that a beam satisfies; (3) indication information (namely, second indication information) indicating that a reference signal corresponding to a beam that satisfies an event is an SSB or a CSI-RS; (4) a total quantity of events that a beam satisfies and/or a total quantity of beams that satisfy an event, namely, the first indication information; (5) an index of a beam that satisfies an event and whose corresponding reference signal is an SSB or a CSI-RS; (6) an index (for example, a TCI state ID) of a beam that satisfies an event; (7) a BWP ID; and (8) LCG ID(s).

For example, the second information may include several combinations of the following: (1) a quantity of events that a beam satisfies or a quantity of beams that satisfy an event, reported by using preset bits (for example, four bits); (2) an index of a cell that satisfies an event and a beam ID of a beam that satisfies an event; (3) an index of a cell that satisfies an event, an index of a beam that satisfies an event, and an index of an event that a beam satisfies; (4) a conventional BSR that is reported, where a buffer size is determined based on a quantity of events reported based on triggering, or a specific value may indicate that reporting is triggered by event satisfaction; and (5) a conventional SR that is reported, where the SR is a specific value, and the specific value indicates that reporting is triggered by event satisfaction. (1) to (4) may be BSRs; and (5) may be an SR.

Optionally, different from the conventional SR, for mobility-triggered reporting, the base station may schedule a resource in advance after identification.

**S304: The base station schedules the uplink resource for the UE based on the second information.**

For example, the uplink resource is used to report DCI information (format) of physical control information (for example, a UL grant) of the first information.

**S305: The UE reports the first information to the base station based on the uplink resource, where a format of the first information is a first format.**

Optionally, specific content of the first information may be configured by the network, or may be specified in a protocol/customized.

In an implementation, the first information may be carried in the MAC CE. For example, the first information specifically includes at least one of the following: an index (config ID) of a cell (namely, the first cell) that satisfies an event; an index of an event that a beam satisfies, for example, reporting may be performed based on an index of an event that each cell (per cell) satisfies or an index of an event that a beam (per beam) satisfies, that is, a correspondence between the first cell and an event or a correspondence between a beam and an event may be indicated; a quantity of events that a beam satisfies or a quantity of beams (namely, the first indication information), where the quantity of events or the quantity of beams indicates that the second information further includes a quantity of event-related information blocks (namely, measurement-related information) corresponding to the quantity of events and the quantity of beams, for example, if the quantity of events that the beam satisfies is 2, the second information may include two groups of measurement-related information; an index (namely, third indication information) of a beam that satisfies an event and whose corresponding reference signal is an SSB or a CSI-RS, for example, the index is a CRI or an SSBRI; an index (for example, a beam index or a TCI state ID) of a beam that satisfies an event; a BWP ID; signal quality of a beam that satisfies an event; signal quality of the first cell; and fourth indication information, where the fourth indication information indicates whether there is a timing advance TA, and the timing advance TA may be measured by the UE.

The first cell may include a serving cell and/or a candidate cell; signal quality of the beam that satisfies the event may be specifically a signal difference from a serving beam, a difference from a first-ranked beam in a list, a difference from an anchor beam, and a difference from the beam that satisfies the event; and the signal quality of the cell may be a weighted average or an average of signal quality of a plurality of beams that satisfy an event, or an average of signal quality of a pre-configured quantity of beams.

The following exemplarily shows several possible pieces of information content of the first information in the MAC CE.

Implementation 1: The first information includes an index of a cell that satisfies an event, an index of a beam that satisfies an event, and signal quality of a cell that satisfies an event. The cell index and the beam index may be arranged in a preset order, or arranged according to signal quality of the cell or signal quality of the beam.

Implementation 2: The first information includes a beam that satisfies an event, an index of an event that the beam satisfies, and signal quality of a serving beam.

Implementation 3: The first information includes an index of a cell that satisfies an event, an index of a beam that satisfies an event, an index of an event that a beam satisfies, signal quality corresponding to the beam that satisfies the event, and a quantity of cells that satisfy an event or a quantity of events.

Table 2 provides an example of a format of the first information.

**Table 2**

| | | |
|---|---|---|
| Information 1: serving cell identifier (servingcell ID) | Information 2: beam index (RS index) | Information 3: quantity of triggered cells (numberoftriggerdcell) |
| Information 4: candidate cell identifier (candidate cell ID) | Information 5: event identifier (for example, event ID for RS-0=1) corresponding to a beam indicated by a beam index | Information 6: signal quality (for example, SINR for RS-0) of a beam indicated by a beam index |

The beam indicated by the beam index is a beam that satisfies a preset event; the triggered cell is a cell that satisfies the preset event; the event identifier corresponding to the beam index indicates an event that a beam corresponding to the beam index in Table 2 satisfies, for example, the event ID for RS-0=1, which may indicate that an event identifier corresponding to a beam whose beam index is RS-0 is 1; the event identifier corresponding to the beam index indicates an event that a beam corresponding to the beam index in Table 2 satisfies, for example, the event ID for RS-0=1, which may indicate that an event identifier corresponding to a beam whose beam index is RS-0 is 1; and the signal quality of the beam indicated by the beam index indicates signal quality of a beam corresponding to the beam index in Table 2, for example, the SINR for RS-0, which may indicate a signal to interference plus noise ratio (signal to interference plus noise ratio, SINR) of a beam whose beam index is RS-0.

Implementation 4: The first information includes an index (for example, a config ID) of a cell that satisfies an event, a time index of an event that a beam satisfies, and signal quality corresponding to a plurality of beams. The signal quality corresponding to the plurality of beams in the first information may be arranged in an order by signal quality, for example, in an order by difference. It should be understood that the event is used to trigger reporting of the first information, but more beam information is required for determining. However, quality signaling overheads for only one beam are small, but information is insufficient.

Table 3 provides an example of another format of the second information.

**Table 3**

| | | |
|---|---|---|
| Information 1: serving cell identifier (serving cell ID) | Information 7: indication of whether a beam satisfies an event (for example, RS-0=1, RS-1=0) | Information 3: quantity of triggered cells (numberoftriggerdcell) |
| Information 4: candidate cell identifier (candidate cell ID) | Information 8: event identifier (for example, event ID) | Information 6: signal quality (for example, RSPR for RS-0) of a beam indicated by a beam index |

Whether the beam satisfies the event may be indicated by using a preset value. For example, 1 indicates that the beam satisfies the event, and 0 indicates that the beam does not satisfy the event. In this case, RS-0=1 indicates that a beam whose beam index is RS-0 satisfies the event, and RS-1=0 indicates that a beam whose beam index is RS-1 satisfies the event.

By comparing the information 5 in Table 2 with the information 7 and the information 8 in Table 3, it may be learned that, in this application, one piece of indication information (for example, the information 5) may indicate both an index of a beam that satisfies an event and an event that the index of the beam satisfies, or two separate pieces of indication information may respectively indicate an index of a beam that satisfies an event and an event that the index of the beam satisfies. For example, the information 7 only indicates a beam that satisfies an event but does not indicate an event that the beam satisfies, and the information 8 indicates an event that a beam satisfies but does not indicate which beam satisfies the event. This is not limited in this application.

In another implementation, the first information may be carried in the UCI. For example, the first information specifically includes at least one of the following: an index (config ID) of a cell that satisfies an event, an index of a beam that satisfies an event and whose corresponding reference signal is an SSB or a CSI-RS or an index (for example, a TCI state ID) of a beam that satisfies an event, signal quality of a beam that satisfies an event, and event-related quality (for example, quality of a serving cell or a reference threshold). For example, the signal quality of the beam signal may be specifically any one of the following: a signal difference from a serving beam, a difference from 1^{st} signal quality of a current cell, a difference from a beam with a best signal of the current cell, and a difference from a beam that satisfies an event.

Optionally, the second information may include information associated with the first information. Association may mean that a part or all of information in the first information and a part or all of information in the second information belong to a same cell or a same CU. For example, the first information includes an identifier of a cell 1, and the second information includes an index of a beam in the cell 1 and signal quality of the beam in the cell 1. Alternatively, association may mean that the second information indicates a quantity of cells or a quantity of CUs corresponding to data in the first information, namely, a quantity of cells or CUs from which the data in the first information comes. For example, the first information includes indication information indicating that the quantity of cells is 3, and the second information includes cell information of the three cells.

For example, when the first information may be carried in the UCI, the second information may be a list of cells, a list of CUs, a quantity of cells, or a quantity of CUs that satisfy an event, and the first information may be sent by using a plurality of pieces of UCI. A quantity of pieces of UCI used to send the first information may be the same as the quantity of cells or the quantity of CUs. In addition, a sequence of the plurality of pieces of UCI sent by the UE may be determined based on a cell sequence in the cell list or a CU sequence in the CU list. The plurality of pieces of UCI are in a one-to-one correspondence with cells in the cell list, or the plurality of pieces of UCI are in a one-to-one correspondence with CUs in the CU list.

For example, the UE sends the second information to the base station, the second information includes a cell list, the cell list includes three cells, and the three cells are a cell 1, a cell 2, and a cell 3 in sequence. In this case, after receiving the second information, the base station may schedule a PUSCH of the UE based on DCI; and the UE schedules, based on the PUSCH, three pieces of CSI to sequentially report information corresponding to the cell 1, information corresponding to the cell 2, and information corresponding to the cell 3. The information corresponding to the cell 1, the information corresponding to the cell 2, and the information corresponding to the cell 3 are the first information. For example, information corresponding to a cell may include an index of a beam that satisfies an event in beams of the cell and signal quality of the beam. The following exemplarily shows several possible pieces of information content of the first information in the UCI.

Implementation 1: signal quality of a serving beam, indexes of a cell and a beam that satisfy an event, and an index (0 or 1) indicating whether an event is satisfied. 0 indicates that the beam does not satisfy the event, and 1 indicates that the beam satisfies the event.

For example, if the first information is carried in the UCI, quality corresponding to a related beam in the cell is reported, and one piece of UCI may be reported for each cell. A speed of reporting the first information by using the UCI is faster, but less information may be carried.

Implementation 2: an index (for example, a config ID) of a cell that satisfies an event, an index (for example, a beam ID or a TCI state ID) of a beam that satisfies an event, indexes of n beams in the cell, and signal quality corresponding to a beam, where n is a preset value.

In this embodiment of this application, the event is used to trigger reporting of the first information. The first information includes only the signal quality of the beam, to reduce signaling overheads. The beam includes a beam that satisfies an event and a beam that does not satisfy an event in a cell to which the beam belongs.

Implementation 3: an index (for example, a config ID) of a cell that satisfies an event, an index of an event that a beam satisfies, signal quality of a beam that satisfies an event, and quality of the cell that satisfies an event. The quality of the cell may be obtained based on a weighted average of signal quality of beams that satisfy an event or may be obtained through calculation according to another method. This is not limited in this application.

The event is used to trigger reporting of the first information, and a satisfied event is reported, for the base station to determine whether a beam or a cell needs to be handed over.

FIG. 4 is a schematic flowchart of another communication method according to an embodiment of this application.

**S401: The base station sends a configuration of an L1 measurement event to the UE, where the configuration includes information about at least one event.**

For example, for specific implementation of step S401, refer to the related content of step S301. Details are not described herein again.

**S402: The UE determines that a reporting format of the L1 measurement result is a first format.**

For example, for specific implementation of step S402, refer to the related content of step S302. Details are not described herein again.

**S403: The UE reports first information to the base station based on a pre-configured uplink resource, where a format of the first information is the first format.**

Optionally, specific content of the first information may be configured by the base station, or may be specified in a protocol/customized.

Optionally, the first information may be carried in a MAC CE or UCI. For specific content of the first information when the first information is carried in the MAC CE or the UCI, refer to step S305.

In this embodiment of this application, the uplink resource used by the UE for sending the first information is pre-configured. Therefore, the UE does not need to request the base station to schedule an uplink resource for sending the first information, thereby improving measurement reporting efficiency.

In other embodiments of this application, a terminal device may alternatively report only RS indexes and related quality, without distinguishing between cells and directly numbering all RSs across CUs. For example, a network device configures indexes of reference signals corresponding to all beams; and the terminal device measures a configured reference signal, and performs reporting (that is, sending to the base station) if a beam of the reference signal satisfies a first condition. Reported content is an index of the reference signal and corresponding quality.

In this application, the network device and the terminal device may be divided into functional modules based on the foregoing method embodiments. For example, each functional module corresponding to each function may be obtained through division, or two or more functions may be integrated into one processing module. The foregoing integrated module may be implemented in a form of hardware, or may be implemented in a form of a software functional module. It should be noted that division into the modules in this application is an example, and is merely logical function division. During actual implementation, there may be another division manner. The following describes in detail a communication apparatus in embodiments of this application with reference to FIG. 5 to FIG. 7.

FIG. 5 is a diagram of a structure of a communication apparatus according to an embodiment of this application. As shown in FIG. 5, the communication apparatus may include a processing unit 10 and a transceiver unit 20.

In some embodiments of this application, the communication apparatus may be the terminal device shown above or a chip or a circuit disposed in the terminal device. In other words, the communication apparatus may be configured to perform the steps, the functions, or the like performed by the terminal device in the foregoing method embodiments.

In a design, the transceiver unit 20 is configured to: receive a first configuration, where the first configuration is used to measure M beams, and the first configuration further indicates at least one first condition; and send first information, where the first information includes layer-1 measurement information of N beams, each of the N beams satisfies the at least one first condition, N is less than or equal to M, and the N beams belong to the M beams.

In a possible implementation, the processing unit 10 is configured to measure the N beams to obtain the layer-1 measurement information of the N beams.

In a possible implementation, the processing unit 10 is configured to: measure the M beams to obtain layer-1 measurement information of the M beams; and determine the N beams based on the layer-1 measurement information of the M beams and the at least one first condition.

In a possible implementation, the first condition includes at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, where the serving beam, the first beam, and the second beam belong to the M beams.

In a possible implementation, the N beams include a third beam, the third beam and a fourth beam belong to a same cell, a same distributed unit DU, or a same central unit CU, the fourth beam does not belong to the N beams, and the first information further includes layer-1 measurement information of the fourth beam.

In a possible implementation, the transceiver unit 20 is configured to: send second information, where the second information is used to request an uplink resource, and the uplink resource is used for sending the first information.

In a possible implementation, the second information includes at least one of the following: one or more identifiers of one or more CUs; one or more identifiers of one or more DUs; one or more identifiers corresponding to one or more first cells, where at least one beam in beams corresponding to the first cell belongs to the N beams; or identifiers corresponding to M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a bandwidth part BWP; or an identifier of a logical channel group LCG.

In a possible implementation, the first information includes at least one of the following: one or more identifiers corresponding to one or more first cells, where at least one beam in beams corresponding to the first cell belongs to the N beams; or identifiers of M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a BWP; or signal quality of the N beams; or signal quality of the first cell; or fourth indication information, where the fourth indication information indicates whether there is a timing advance TA.

In a possible implementation, the signal quality of the first cell may be a weighted average or an average of signal quality of beams that belong to the N beams in the beams corresponding to the first cell, or an average of signal quality of a preset quantity of beams in the beams corresponding to the first cell.

In a possible implementation, the transceiver unit 20 is configured to: receive a first message, where the first message is used to request the first information.

In a possible implementation, the transceiver unit 20 is configured to: receive fifth indication information, where the fifth indication information indicates a format of the first information.

In this embodiment of this application, for descriptions of the first configuration, the first information, and the like, refer to the descriptions in the foregoing method embodiments shown in FIG. 2 to FIG. 4. Details are not described herein again.

It may be understood that specific descriptions of the processing unit 10 and the transceiver unit 20 shown in this embodiment of this application are merely examples. For specific functions, performed steps, or the like of the processing unit 10 and the transceiver unit 20, refer to the foregoing method embodiments shown in FIG. 2 to FIG. 4. Details are not described herein again. In addition, for technical effects of this embodiment of this application, refer to the technical effects of the foregoing method embodiments shown in FIG. 2 to FIG. 4. For brevity, details are not described herein again.

With reference to FIG. 5 again, in some other embodiments of this application, the communication apparatus may be the terminal device shown above or a chip or a circuit disposed in the terminal device. In other words, the communication apparatus may be configured to perform the steps, the functions, or the like performed by the terminal device in the foregoing method embodiments.

In a design, the transceiver unit 20 is configured to: send a first configuration, where the first configuration is used to measure M beams, and the first configuration further indicates at least one first condition; and receive first information, where the first information includes layer-1 measurement information of N beams, each of the N beams satisfies the at least one first condition, N is less than or equal to M, and the N beams belong to the M beams.

In a possible implementation, the first condition includes at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, where the serving beam, the first beam, and the second beam belong to the M beams.

In a possible implementation, the N beams include a third beam, the third beam and a fourth beam belong to a same cell, a same distributed unit DU, or a same central unit CU, the fourth beam does not belong to the N beams, and the first information further includes layer-1 measurement information of the fourth beam.

In a possible implementation, the transceiver unit 20 is configured to: receive second information, where the second information includes information associated with the first information, and/or the second information is used to request an uplink resource, and the uplink resource is used for sending the first information.

In a possible implementation method, the processing unit 10 is configured to schedule the uplink resource based on the second information.

In a possible implementation, the second information includes at least one of the following: one or more identifiers of one or more CUs; one or more identifiers of one or more DUs; one or more identifiers corresponding to one or more first cells, where at least one beam in beams corresponding to the first cell belongs to the N beams; or identifiers corresponding to M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a bandwidth part BWP; or an identifier of a logical channel group LCG.

In a possible implementation, the first information includes at least one of the following: one or more identifiers corresponding to one or more first cells, where at least one beam in beams corresponding to the first cell belongs to the N beams; or identifiers of M first conditions; or first indication information, where the first indication information indicates K and/or N, and K is a quantity of first conditions that the N beams satisfy; or second indication information, where the second indication information indicates a beam type in beam types of the N beams that satisfies a preset beam type, and the preset beam type is a synchronization signal/physical broadcast channel block SSB or a channel state information beam CSI-RS; or third indication information, where the third indication information is used for a beam in the N beams that satisfies the preset beam type; or identifiers corresponding to the N beams; or an identifier of a BWP; or signal quality of the N beams; or signal quality of the first cell; or fourth indication information, where the fourth indication information indicates whether there is a timing advance TA.

In a possible implementation, the signal quality of the first cell may be a weighted average or an average of signal quality of beams that belong to the N beams in the beams corresponding to the first cell, or an average of signal quality of a preset quantity of beams in the beams corresponding to the first cell.

In a possible implementation, the transceiver unit 20 is configured to: receive a first message, where the first message is used to request the first information.

In a possible implementation, the transceiver unit 20 is configured to: send fifth indication information, where the fifth indication information indicates a format of the first information.

In this embodiment of this application, for descriptions of the first configuration, the first information, and the like, refer to the descriptions in the foregoing method embodiments shown in FIG. 2 to FIG. 4. Details are not described herein again.

It may be understood that specific descriptions of the processing unit 10 and the transceiver unit 20 shown in this embodiment of this application are merely examples. For specific functions, performed steps, or the like of the processing unit 10 and the transceiver unit 20, refer to the foregoing method embodiments shown in FIG. 2 to FIG. 4. Details are not described herein again. In addition, for technical effects of this embodiment of this application, refer to the technical effects of the foregoing method embodiments shown in FIG. 2 to FIG. 4. For brevity, details are not described herein again.

The foregoing describes the network device and the terminal device in embodiments of this application. The following describes possible product forms of the network device and the terminal device. It should be understood that a product in any form that has a function of the network device or the terminal device in FIG. 5 falls within the protection scope of embodiments of this application. It should be further understood that the following descriptions are merely examples, and a product form of the communication apparatus in embodiments of this application is not limited thereto.

In a possible implementation, the communication apparatus shown in FIG. 5 may further include a processing unit, and the processing unit may be one or more processors. The transceiver unit 20 and the processing unit 10 are integrated into one device, for example, a transceiver. Alternatively, the transceiver unit 20 may be a transmitter, and the processing unit 10 may be a receiver. In embodiments of this application, the processor and the transceiver may be coupled, or the like. A manner of connection between the processor and the transceiver is not limited in embodiments of this application. In a process of performing the foregoing methods, a process of sending information in the foregoing methods may be understood as a process of outputting the information by the processor. When outputting the information, the processor outputs the information to the transceiver, so that the transceiver transmits the information. After the information is output by the processor, other processing may further need to be performed on the information before processed information arrives at the transceiver. Similarly, a process of receiving information in the foregoing methods may be understood as a process of receiving the input information by the processor. When the processor receives the input information, the transceiver receives the information, and inputs the information to the processor. Further, after the transceiver receives the information, other processing may need to be performed on the information before processed information is input to the processor.

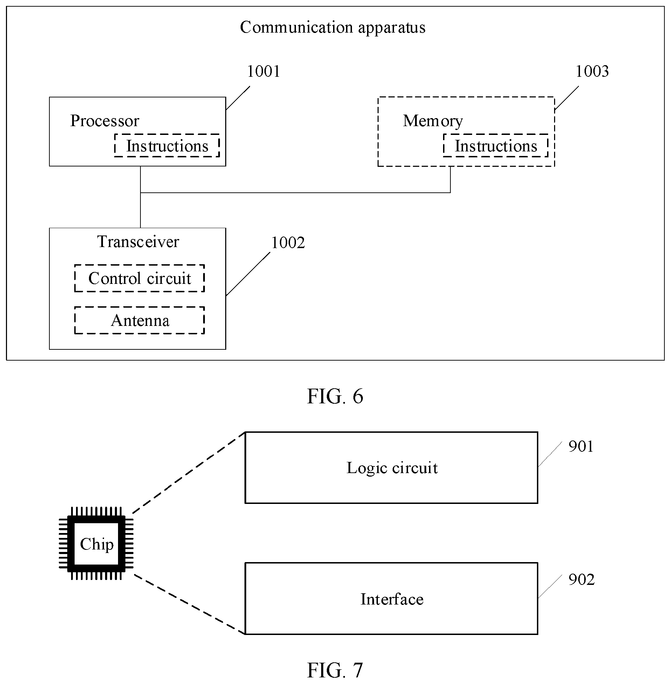

FIG. 6 is a diagram of another structure of a communication apparatus according to an embodiment of this application. As shown in FIG. 6, the communication apparatus provided in this embodiment of this application may be configured to implement the methods described in the foregoing method embodiments. For details, refer to the descriptions in the foregoing method embodiments. The communication apparatus may be a network device, a terminal device, or a chip in the network device or the terminal device. For example, the communication apparatus includes one or more processors 1001 and a transceiver 1002. The communication apparatus may further include a memory 1003. In an implementation, the communication apparatus further includes an input/output apparatus (not shown in FIG. 6).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal, and process the radio frequency signal. The antenna is mainly configured to receive or send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1001; and the processor 1001 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the steps, methods, or functions performed by the terminal device in the embodiment shown in FIG. 2, the transceiver 1002 may be configured to perform step S201 and step S202 in FIG. 2, and/or configured to perform another process of the technology described in this specification.

For example, when the communication apparatus is configured to perform the steps, methods, or functions performed by the network device in the embodiment shown in FIG. 2, the transceiver 1002 may be configured to perform step S201 and step S202 in FIG. 2, and/or configured to perform another process of the technology described in this specification.

In any one of the foregoing implementations, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing implementations, the processor 1001 may store instructions. The instructions may be a computer program. The computer program is run on the processor 1001, so that the communication apparatus performs the methods described in the foregoing method embodiments. The computer program may be built in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus described in embodiments of this application may further have more components than those shown in FIG. 6, and the like. This is not limited in embodiments of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 5, the processing unit 10 may be one or more logic circuits, and the transceiver unit 20 may be an input/output interface, which is also referred to as a communication interface, an interface circuit, an interface, or the like. Alternatively, the transceiver unit 20 may be a sending unit and a receiving unit. The sending unit may be an output interface, and the receiving unit may be an input interface. The sending unit and the receiving unit are integrated into one unit, for example, an input/output interface.

FIG. 7 is a diagram of still another structure of a communication apparatus according to an embodiment of this application. As shown in FIG. 7, the communication apparatus shown in FIG. 7 includes a logic circuit 901 and an interface 902. To be specific, the processing unit may be implemented through the logic circuit 901, and the transceiver unit 20 and the processing unit 10 may be implemented through the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 7 shows an example in which the communication apparatus is a chip. The chip includes the logic circuit 901 and the interface 902.

In this embodiment of this application, the logic circuit and the interface may be further coupled to each other. A specific manner of connection between the logic circuit and the interface is not limited in this embodiment of this application.

For example, when the communication apparatus is configured to perform the steps, methods, or functions performed by the terminal device in the method embodiment shown in FIG. 2, the logic circuit 901 is configured to measure M beams; and the interface 902 is configured to send first information and the like.

For example, when the communication apparatus is configured to perform the steps, methods, or functions performed by the network device in the method embodiment shown in FIG. 2, the interface 902 is configured to send a first configuration and the like.

In this embodiment of this application, for descriptions of first indication information, second indication information, and the like, refer to the descriptions in the method embodiment shown in FIG. 2. Details are not described herein again. It may be understood that, for specific descriptions of the logic circuit 901 and the interface 902, refer to the descriptions of the processing unit, the transceiver unit, and the processing unit shown in FIG. 6. Details are not described herein again.

It can be understood that the communication apparatus described in embodiments of this application may implement the methods provided in embodiments of this application in a form of hardware, or may implement the methods provided in embodiments of this application in a form of software. This is not limited in embodiments of this application.

For specific implementations of embodiments shown in FIG. 7, refer to the foregoing embodiments. Details are not described herein again.

An embodiment of this application further provides a communication system. The communication system includes a network device and a terminal device. The network device and the terminal device may be configured to perform the method in any one of the foregoing method embodiments (FIG. 2 to FIG. 4).

In addition, this application further provides a computer program. The computer program is used to implement operations and/or processing performed by the network device in the methods provided in this application.

This application further provides a computer program. The computer program is used to implement operations and/or processing performed by the terminal device in the methods provided in this application.

This application further provides a computer-readable storage medium. The computer-readable storage medium stores computer code. When the computer code is run on a computer, the computer is caused to perform operations and/or processing performed by the network device in the methods provided in this application.

This application further provides a computer-readable storage medium. The computer-readable storage medium stores computer code. When the computer code is run on a computer, the computer is caused to perform operations and/or processing performed by the terminal device in the methods provided in this application.

This application further provides a computer program product. The computer program product includes computer code or a computer program. When the computer code or the computer program is run on a computer, operations and/or processing performed by the network device in the methods provided in this application are/is performed.

This application further provides a computer program product. The computer program product includes computer code or a computer program. When the computer code or the computer program is run on a computer, operations and/or processing performed by the terminal device in the methods provided in this application are/is performed.

In the several embodiments provided in this application, it should be understood that the disclosed system, apparatus, and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. A part or all of the units may be selected according to an actual requirement to implement the technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, or the part contributing to the conventional technology, or all or a part of the technical solutions may be implemented in a form of a software product. The computer software product is stored in a readable storage medium, and includes several instructions for instructing a computer device (which may be a personal computer, a server, a network device, or the like) to perform all or a part of the steps of the methods described in embodiments of this application. The readable storage medium includes various media that may store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application should be subject to the protection scope of the claims.

## Claims

1. A communication method, wherein the method comprises:
receiving a first configuration, wherein the first configuration is used to measure M beams, and the first configuration further indicates at least one first condition; and
sending first information, wherein the first information comprises layer-1 measurement information of N beams, each of the N beams satisfies the at least one first condition, N is less than or equal to M, and the N beams belong to the M beams.

2. The method according to claim 1, wherein the first condition comprises at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, wherein the serving beam, the first beam, and the second beam belong to the M beams.

3. The method according to claim 1 or 2, wherein the N beams comprise a third beam, the third beam and a fourth beam belong to a same cell, a same distributed unit DU, or a same central unit CU, the fourth beam does not belong to the N beams, and the first information further comprises layer-1 measurement information of the fourth beam.

4. The method according to any one of claims 1 to 3, wherein the method further comprises:
sending second information, wherein the second information comprises information associated with the first information, and/or the second information is used to request an uplink resource, and the uplink resource is used for sending the first information.

5. The method according to claim 4, wherein the second information comprises at least one of the following: one or more identifiers of one or more CUs; one or more identifiers of one or more DUs; one or more identifiers corresponding to one or more first cells, wherein at least one beam in beams corresponding to the first cell belongs to the N beams; or identifiers corresponding to the M first conditions; or first indication information, wherein the first indication information indicates K and/or N, and K is a quantity of first conditions that the N beams satisfy; or second indication information, wherein the second indication information indicates a beam type in beam types of the N beams that satisfies a preset beam type, and the preset beam type is a synchronization signal/physical broadcast channel block SSB or a channel state information beam CSI-RS; or third indication information, wherein the third indication information is used for a beam in the N beams that satisfies the preset beam type; or identifiers corresponding to the N beams; or an identifier of a bandwidth part BWP; or an identifier of a logical channel group LCG.

6. The method according to any one of claims 1 to 5, wherein the first information comprises at least one of the following: one or more identifiers corresponding to one or more first cells, wherein at least one beam in beams corresponding to the first cell belongs to the N beams; or identifiers of the M first conditions; or first indication information, wherein the first indication information indicates K and/or N, and K is a quantity of first conditions that the N beams satisfy; or second indication information, wherein the second indication information indicates a beam type in beam types of the N beams that satisfies a preset beam type, and the preset beam type is a synchronization signal/physical broadcast channel block SSB or a channel state information beam CSI-RS; or third indication information, wherein the third indication information is used for a beam in the N beams that satisfies the preset beam type; or identifiers corresponding to the N beams; or an identifier of a BWP; or signal quality of the N beams; or signal quality of the first cell; or fourth indication information, wherein the fourth indication information indicates whether there is a timing advance TA.

7. The method according to claim 6, wherein the signal quality of the first cell may be a weighted average or an average of signal quality of beams that belong to the N beams in the beams corresponding to the first cell, or an average of signal quality of a preset quantity of beams in the beams corresponding to the first cell.

8. The method according to any one of claims 1 to 7, wherein the method further comprises: receiving a first message, wherein the first message is used to request the first information.

9. The method according to any one of claims 1 to 8, wherein the method further comprises:
receiving fifth indication information, wherein the fifth indication information indicates a format of the first information.

10. A communication method, wherein the method comprises:
sending a first configuration, wherein the first configuration is used to measure M beams, and the first configuration further indicates at least one first condition; and
receiving first information, wherein the first information comprises layer-1 measurement information of N beams, each of the N beams satisfies the at least one first condition, N is less than or equal to M, and the N beams belong to the M beams.

11. The method according to claim 10, wherein the first condition comprises at least one of the following: signal quality of a serving beam is less than a first threshold; or an increase or a decrease of the signal quality of the serving beam is greater than a second threshold; or signal quality of a first beam is greater than a third threshold; the first beam and the serving beam are different beams; or the signal quality of the first beam is greater than the signal quality of the serving beam and a difference between the signal quality of the first beam and the signal quality of the serving beam is greater than a fourth threshold; or the signal quality of the first beam is greater than a fifth threshold and the signal quality of the serving beam is less than a sixth threshold; or signal quality of a second beam is less than a seventh threshold and the second beam is a preset beam; or an increase or a decrease of the signal quality of the first beam is greater than an eighth threshold, wherein the serving beam, the first beam, and the second beam belong to the M beams.

12. The method according to claim 10 or 11, wherein the N beams comprise a third beam, the third beam and a fourth beam belong to a same cell, a same distributed unit DU, or a same central unit CU, the fourth beam does not belong to the N beams, and the first information further comprises layer-1 measurement information of the fourth beam.

13. The method according to any one of claims 10 to 12, wherein the method further comprises:
receiving second information, wherein the second information comprises information associated with the first information, and/or the second information is used to request an uplink resource, and the uplink resource is used for sending the first information.

14. The method according to claim 13, wherein the second information comprises at least one of the following: one or more identifiers of one or more CUs; one or more identifiers of one or more DUs; one or more identifiers corresponding to one or more first cells, wherein at least one beam in beams corresponding to the first cell belongs to the N beams; or identifiers corresponding to the M first conditions; or first indication information, wherein the first indication information indicates K and/or N, and K is a quantity of first conditions that the N beams satisfy; or second indication information, wherein the second indication information indicates a beam type in beam types of the N beams that satisfies a preset beam type, and the preset beam type is a synchronization signal/physical broadcast channel block SSB or a channel state information beam CSI-RS; or third indication information, wherein the third indication information is used for a beam in the N beams that satisfies the preset beam type; or identifiers corresponding to the N beams; or an identifier of a bandwidth part BWP; or an identifier of a logical channel group LCG.

15. The method according to any one of claims 10 to 14, wherein the first information comprises at least one of the following: one or more identifiers corresponding to one or more first cells, wherein at least one beam in beams corresponding to the first cell belongs to the N beams; or identifiers of the M first conditions; or first indication information, wherein the first indication information indicates K and/or N, and K is a quantity of first conditions that the N beams satisfy; or second indication information, wherein the second indication information indicates a beam type in beam types of the N beams that satisfies a preset beam type, and the preset beam type is a synchronization signal/physical broadcast channel block SSB or a channel state information beam CSI-RS; or third indication information, wherein the third indication information is used for a beam in the N beams that satisfies the preset beam type; or identifiers corresponding to the N beams; or an identifier of a BWP; or signal quality of the N beams; or signal quality of the first cell; or fourth indication information, wherein the fourth indication information indicates whether there is a timing advance TA.

16. The method according to claim 15, wherein the signal quality of the first cell may be a weighted average or an average of signal quality of beams that belong to the N beams in the beams corresponding to the first cell, or an average of signal quality of a preset quantity of beams in the beams corresponding to the first cell.

17. The method according to any one of claims 1 to 16, wherein the method further comprises:
receiving a first message, wherein the first message is used to request the first information.

18. The method according to any one of claims 10 to 17, wherein the method further comprises:
sending fifth indication information, wherein the fifth indication information indicates a format of the first information.

19. A communication apparatus, comprising a module or unit configured to perform the method according to any one of claims 1 to 18.

20. A communication apparatus, comprising a processor and an interface circuit, wherein the interface circuit is configured to: receive a signal from another communication apparatus and transmit the signal to the processor or send a signal from the processor to another communication apparatus, and the processor is configured to implement the method according to any one of claims 1 to 18 through a logic circuit or by executing code instructions.

21. A readable storage medium, configured to store a program, wherein the program is executed by one or more processors, to cause an apparatus comprising the one or more processors to perform the method according to any one of claims 1 to 18.

22. A communication system, comprising a terminal device configured to perform the method according to any one of claims 1 to 9 and a network device configured to perform the method according to any one of claims 10 to 18.
